# EUROPÄISCHE PATENTANMELDUNG

(11) **EP 0 668 403 A1**
(43) Veröffentlichungstag der Anmeldung: **23.08.1995**
(21) Anmeldenummer: 95102280.5
(22) Anmeldetag: 17.02.1995
(51) Int. Cl.: E01H 1/08, E01H 1/00, A01B 59/06

(54) **Aufhängung zur Befestigung von Bodenbearbeitungsaggregaten an einem Zug- oder Trägerfahrzeug**

(30) Priorität: 29.12.1994 DE 4447141; 18.02.1994 DE 4405219
(71) Anmelder: Wiedenmann GmbH, D-89192 Rammingen Krs. Ulm (DE)
(72) Erfinder:
(74) Vertreter: Flügel, Otto, Dipl.-Ing.

(57) **Zusammenfassung**

Die Erfindung betrifft eine Aufhängung zur Befestigung von Bodenbearbeitungsaggregaten (23) an einem Zug- oder Trägerfahrzeug, insbesondere einem Kleintraktor (2) oder dgl., mit einem vorzugsweise über Stütz- oder Nachlaufräder (35) abgestützten Rahmen, der entweder starr oder über Lenker höhenverstellbar am Zug- oder Trägerfahrzeug befestigbar ist, wobei der Rahmen im wesentlichen im rechten Winkel zur Längsachse des Zug- oder Trägerfahrzeuges angeordnet und mit dem Bodenbearbeitungsaggregat (23) verbunden ist. Eine Aufhängung für derartige Bodenbearbeitungsaggregate (23), die in einfacher Weise an die unterschiedlichen Abmessungen verschiedener Fahrzeuge, insbesondere Klein- und Kleinsttraktoren (2) anpaßbar ist, wird dadurch geschaffen, daß der Rahmen zumindest eine im wesentlichen parallel verlaufende Schwenkachse (29) aufweist, an welcher zumindest ein Träger (9) als Teil des Bodenbearbeitungsaggregates drehfest befestigt ist, wobei die Schwenkachse (29) in ihrer Längsrichtung verschieblich gelagert ist.

## Beschreibung

Die Erfindung betrifft eine Aufhängung zur Befestigung von Bodenbearbeitungsaggregaten an einem Zug- oder Trägerfahrzeug, insbesondere einem Kleintraktor oder dgl., mit einem vorzugsweise über Stütz- oder Nachlaufräder abgestützten Rahmen, der entweder starr oder über Lenker höhenverstellbar am Zug- oder Trägerfahrzeug befestigbar ist, wobei der Rahmen im wesentlichen im rechten Winkel zur Längsachse des Zug- oder Trägerfahrzeuges angeordnet oder mit dem Bodenbearbeitungsaggregat verbunden ist.

Aus dem Stand der Technik sind bspw. Traktoren oder Schlepper bekannt, die mit verschiedenen Bodenbearbeitungsaggregaten, wie bspw. Kehr-oder Mähgeräten ausgerüstet werden, um einem entsprechenden Einsatz zu dienen. Hierbei hat es sich insbesondere bei sogenannten Klein- und Kleinsttraktoren als vorteilhaft erwiesen, diese Bodenbearbeitungsgeräte im Heckbereich zu befestigen, wobei bspw. ein Kehr- oder Mähkopf seitlich oder im Frontbereich des Fahrzeuges angeordnet wird. Da die Klein- und Kleinsttraktoren verschiedener Hersteller unterschiedliche Abmessungen, insbesondere hinsichtlich ihres Radstandes und ihrer Spurweite im Bereich der Hinterräder aufweisen, ist es notwendig, daß für jeden Klein- oder Kleinsttraktor ein entsprechendes Bodenbearbeitungsaggregat konstruiert und von den Herstellern derartiger Aggregate vorgehalten wird.

Ausgehend von diesem Stand der Technik liegt der Erfindung die Aufgabe zugrunde, eine Aufhängung für derartige Bodenbearbeitungsaggregate zu schaffen, die in einfacher Weise an die unterschiedlichen Abmessungen verschiedener Fahrzeuge, insbesondere Klein- und Kleinsttraktoren anpaßbar ist. Hierbei soll die Anordnung der Bodenbearbeitungsaggregate insbesondere hinsichtlich eines effektiven und sicheren Einsatzes der Bodenbearbeitungsaggregate auf die Abmessungen des Zug-oder Trägerfahrzeuges angepaßt werden.

Die Lösung dieser Aufgabenstellung sieht vor, daß der Rahmen zumindest eine im wesentlichen parallel verlaufende Schwenkachse aufweist, an welcher zumindest ein Träger als Teil des Bodenbearbeitungsaggregates drehfest befestigt ist, wobei die Schwenkachse in ihrer Längsrichtung verschieblich gelagert ist.

Eine derart ausgebildete Aufhängung zur Befestigung von Bodenbearbeitungsaggregaten an einem Zug- oder Trägerfahrzeug, insbesondere an Klein- und/oder Kleinsttraktoren hat den Vorteil, daß durch die längsverschiebliche Lagerung der Schwenkachse eine Einstellung des Bodenbearbeitungsaggregates hinsichtlich der Spurweite des Zug- oder Trägerfahrzeuges im Bereich seiner Hinterachse möglich ist. Darüberhinaus wird in besonders vorteilhafter Weise eine Verstellung des Bodenbearbeitungsaggregates bezüglich der Aufstandsfläche des Zug- oder Trägerfahrzeuges dadurch erzielt, daß durch die Verdrehbarkeit der Schwenkachse das an der Schwenkachse befestigte Bauteil des Bodenbearbeitungsaggregates um die Schwenkachse verdrehbar ist, so daß bspw. ein Mäh- oder Kehrgerät in einfacher Weise angehoben bzw. abgesenkt werden kann, um das Bodenbearbeitungsgerät an unterschiedliche Gegebenheiten der Aufstandsfläche des Zug- oder Trägerfahrzeuges anzupassen.

Um eine Anpassung des Bodenbearbeitungsaggregates an den Radstand des Zug- oder Trägerfahrzeuges zu erzielen, ist bei einem weiteren Merkmal der Erfindung vorgesehen, daß der Träger in seiner Längsrichtung verschieblich an der Schwenkachse gelagert ist. Somit kann eine optimale Einstellung der Anordnung eines Bodenbearbeitungsaggregates bspw. seitlich eines Traktors zwischen dessen Vorder- und Hinterrad dadurch erfolgen, daß sowohl eine Einstellung in Längsrichtung als auch eine Einstellung quer zu der Längsrichtung des Zug- oder Trägerfahrzeuges erfolgt.

Zur Abstützung des Trägers ist vorgesehen, daß am freien Ende des Trägers zumindest ein Tast- oder Tragrad angeordnet ist.

Die erfindungsgemäße Aufhängung zur Befestigung von Bodenbearbeitungsaggregaten an einem Zug- oder Trägerfahrzeug hat sich insbesondere dann bewährt, wenn der Träger als Kehrkopfrahmen ausgebildet ist, wobei nach einem weiteren Merkmal der Erfindung vorgesehen ist, daß am Kehrkopfrahmen ein Kehrkopf mit zumindest einer Bürstenwalzenaufnahme angeordnet ist, welche begrenzt tordierbar ist, und am Kehrkopf Führungselemente angeordnet sind, die in Arbeitsstellung auf dem zu bearbeitenden Untergrund aufliegen. Durch diese Ausbildung wird eine verbesserte Anpassung des Bodenbearbeitungsaggregates, in diesem Fall des Kehrgerätes an den Gegebenheiten des zu bearbeitenden Untergrundes ermöglicht, da durch die begrenzte Tordierbarkeit der Bürstenwalzenaufnahme zum einen eine Anpassung um die Längsachse des Trägerteils für den Kehrkopf möglich ist und zum anderen die Anordnung von Führungselementen am Kehrkopf eine weitere verbesserte Anpassung der Höhenlage des Bodenbearbeitungsaggregates relativ zum zu bearbeitenden Untergrund ermöglicht wird, wobei insbesondere eine schnelle Anpassung der Höhenlage des Bodenbearbeitungsaggregates bei auftretenden Bodenunebenheiten erzielt wird.
die Verstellung der Schwenkachse erfolgt vorzugsweise hydraulisch oder pneumatisch, wobei sowohl die Verdrehung als auch die Verschiebung der Schwenkachse entlang ihrer Längsrichtung in dieser Weise erfolgt. Hierzu ist im Bereich der Aufhängung ein Hydraulikaggregat vorgesehen, welches über einen Riemenantrieb mit einer Welle verbunden ist, die an einer Zapfwelle des Zug-oder Trägerfahrzeuges anschließbar ist.

Eine besonders einfache und wirkungsvolle Ausbildung der Führungselemente wird dadurch erzielt, daß diese als Kufen ausgebildet sind, die vorzugsweise seitlich zur Bürstenwalze des Kehrkopfes angeordnet sind und wobei der Kehrkopf Entlastungsfedern hat, die mit den Kufen korrespondierend zusammenwirken und die Bürstenwalzen anheben. Es handelt sich somit um eine sogenannte schwimmende Aufhängung des Kehrkopfes, die zum einen über entsprechende Lenker mit hinterem Drehpunkt und zum anderen durch Aufsetzkufen zur Begrenzung der Absetzlage und schließlich durch Entlastungsfedern erzielt wird, welche die Bürstenwalze nach oben anheben. Der Kehrkopfträger weist zu diesem Zweck das Tast- oder Stützrad auf und ist somit in sich bereits an die Bodenverhältnisse anpaßbar geführt.

Hierbei hat es sich als vorteilhaft erwiesen, die Achse des Tast- oder Tragrades in der Vertikalebene der Stütz- oder Nachlaufräder anzuordnen, wodurch das Tast- oder Tragrad nicht lenkbar ausgebildet werden muß, so daß dieses Tast- oder Tragrad starr im Kehrkopfträger angeordnet werden kann.

Schließlich ist nach einem weiteren Merkmal der Erfindung vorgesehen, daß die Stütz- oder Nachlaufräder hydraulisch oder pneumatisch absenk- und/oder anhebbar sind. Durch diese Ausbildung kann der Rahmen der Bürstenwalze und evtl. daran angeordneten Tellerbesen angehoben werden, so daß bspw. Bordsteine oder ähnliche Unebenheiten überfahren werden können. Selbstverständlich kann diese, auch als Transportstellung bezeichnete Stellung auch durch Anheben des gesamten Bodenbearbeitungsaggregates erzielt werden. Hierbei wird die Schwenkachse derart hydraulisch verstellt, daß das Bodenbearbeitungsaggregat von dem zu bearbeitenden Untergrund abgehoben wird.

Die erfindungsgemäße Aufhängung zur Befestigung von Bodenbearbeitungsaggregaten an einem Zug- oder Trägerfahrzeug ermöglicht die seitliche Anordnung des Bodenbearbeitungsaggregates an insbesondere Klein- und Kleinsttraktoren unterschiedlicher Abmessungen. Diese seitliche Anordnung hat den besonderen Vorteil von sehr kurzen Versorgungsleitungen für das Bodenbearbeitungsaggregat, wie bspw. ein Kehrgerät, bei dem das aufgekehrte Kehrgut über ein Sauggebläse und eine Förderleitung angesaugt und in einen Sammelbehälter gefördert wird. Der Förderkanal weist in diesen Fällen in aller Regel einen Schlauch auf, der aufgrund der seitlichen Anordnung des Bodenbearbeitungsaggregates sehr kurz ausgeführt werden kann. Demzufolge ist auch der Förderkanal sehr kurz, so daß bereits mit geringen Saugleistungen ein vollständiges Absaugen des Kehrgutes möglich ist. Darüberhinaus ist die seitliche Anordnung des Bodenbearbeitungsaggregates von besonderem Vorteil, da hierdurch die gesamten Bauteile des Aggregats, welche auch Wartungstätigkeiten unterworfen sind, von außen zugänglich sind.

Weitere Vorteile und Merkmale der erfindungsgemäßen Aufhängung zur Befestigung von Bodenbearbeitungsaggregaten an einem Zug- oder Trägerfahrzeug ergeben sich aus der nachfolgenden Beschreibung der zugehörigen Zeichnung, in der ein bevorzugtes Ausführungsbeispiel eines Kehrgerätes dargestellt ist, welches mit der erfindungsgemäßen Aufhängung an einem Traktor befestigt ist. In der Zeichnung zeigen:
Figur 1 eine schematisch dargestellte Seitenansicht eines Kehrgeräts;
Figur 2 eine erste Draufsicht auf eine Zwischenachs-Kehreinrichtung für einen Traktor;
Figur 3 eine zweite Draufsicht auf die Zwischenachs-Kehreinrichtung für einen Traktor gemäß Figur 2;
Figur 4 eine schematische Draufsicht auf einen Teil der Zwischenachs-Kehreinrichtung für einen Traktor gemäß den Figuren 2 und 3;
Figur 5 eine erste Ausführungsform eines erfindungsgemäßen Kehrgerätes mit einem Traktor in Draufsicht;
Figur 6 eine zweite Ausführungsform des erfindungsgemäßen Kehrgeräts mit einem Traktor in einer Draufsicht;
Figur 7 eine dritte Ausführungsform des erfindungsgemäßen Kehrgeräts mit einem Traktor in einer Draufsicht und
Figur 8 eine vierte Ausführungsform des erfindungsgemäßen Kehrgeräts mit einem Traktor in einer Draufsicht.

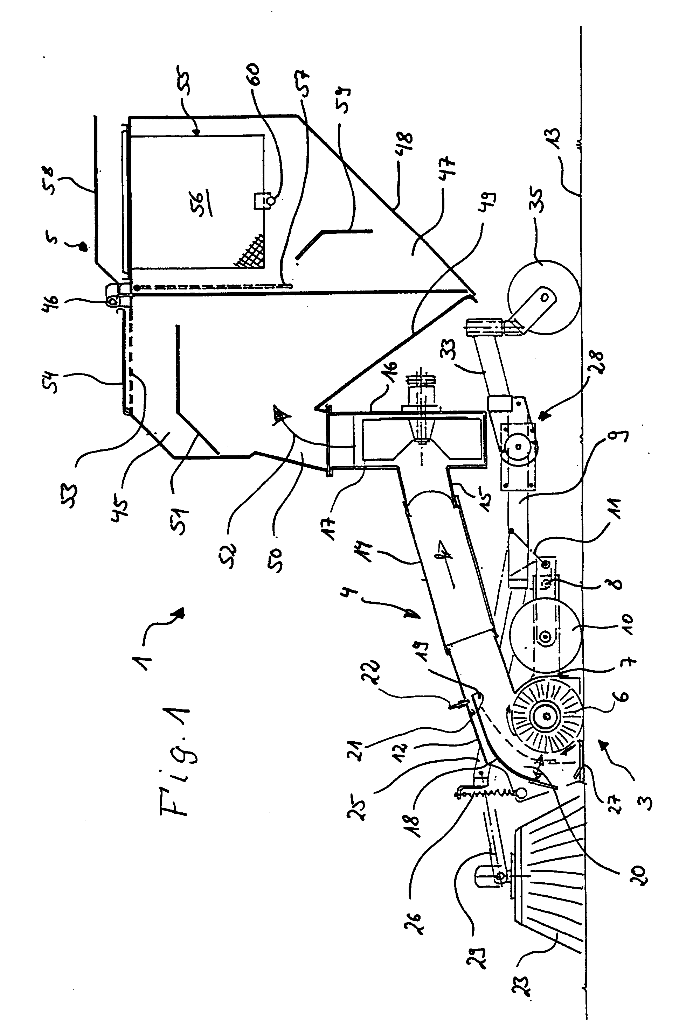

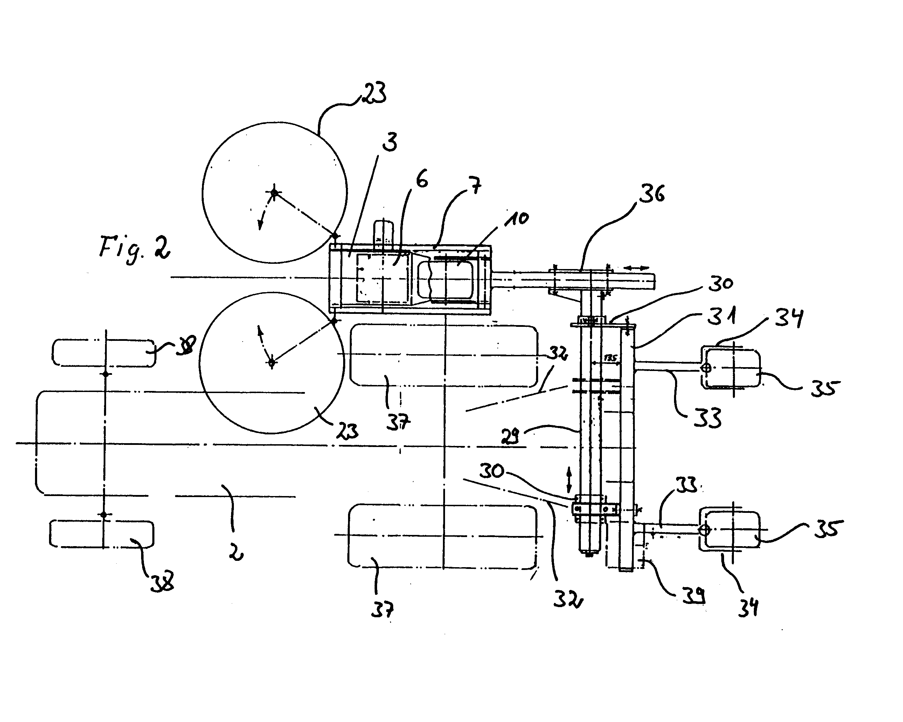

In der Figur 1 ist ein Kehrgerät 1 in einer schematischen Seitenansicht dargestellt. Das Kehrgerät ist als Anbauaggregat für einen Traktor 2 (Figur 2) ausgebildet und besteht aus einem Kehrkopf 3, einem Förderkanal 4 und einer als Sammelbehälter 5 ausgebildeten Aufnahmevorrichtung. Diese Bauteile werden im Nachfolgenden noch genauer beschrieben.

Der Kehrkopf 3 weist eine rotierend angetriebene Kehrwalze 6 auf, die drehbar in einer verdrehweichen Kehrkopfanlenkung 7 gehalten ist und um ein Gelenk 8 schwenkbar an einen Kehrkopfrahmen 9 befestigt ist. An der Kehrkopfanlenkung 7 ist ferner ein Tast- und Tragrad 10 befestigt, das ebenfalls um das Gelenk 8 schwenkbar und über einen Lenker 11 mit dem Kehrkopfrahmen 9 verbunden ist.

Oberhalb der Kehrwalze 6 weist der Kehrkopf 3 ein Saugrohr 12 auf, das zur Kehrwalze 6 offen ausgebildet ist und im wesentlichen vor der Kehrwalze 6 in Richtung auf eine Aufstandsfläche 13 für das Kehrgerät 1 mündet. An das Saugrohr 12 schließt sich ein flexibler Schlauch 14 an, der das Saugrohr 12 mit einem Stutzen 15 eines Gebläsegehäuses 16 verbindet, in dem ein Sauggebläse 17 angeordnet ist. Das Gebläsegehäuse 16 ist ausgangsseitig mit dem Sammelbehälter 5 verbunden. Das Saugrohr 12, der Schlauch 14 und das Gebläsegehäuse 16 bilden den Förderkanal 4, durch den das von der Kehrwalze 6 in die Ansaugöffnung des Saugrohres 12 geworfenes Kehrgut zum Sammelbehälter 5 gefördert wird. Die Förderung des Kehrgutes wird hierbei maßgeblich von den im Gebläsegehäuse 16 angeordneten Sauggebläse 17 durchgeführt. Dieses Sauggebläse 17 erzeugt einen Unterdruck im Förderkanal 4.

Innerhalb des Saugrohres 12 ist ein Leitblech 18 um einen Schwenkpunkt 19 drehbar angeordnet, welches den Querschnitt des Saugrohres 12 in einem Förderkanal 20 und einen Luftnebenkanal 21 unterteilt, wobei der Luftnebenkanal 21 parallel zum Förderkanal 20 verläuft und bei Betrieb des Kehrgerätes 1 im wesentlichen frei von Kehrgut und anderen Verunreinigungen, mit Ausnahme von angesaugtem Staub bleibt. Das Leitblech 18 ist derart um den Schwenkpunkt 19 verschwenkbar im Kehrkopf 3 angeordnet, daß die Eingangsquerschnittsfläche des Saugrohres 12 bzw. des Saugkanals derart einstellbar ist, daß eine Veränderung der Eingangsquerschnittsfläche des Förderkanals 20 eine Veränderung der Eingangsquerschnittsfläche des Luftnebenkanals 21 nach sich zieht. In der Figur 1 sind zwei Stellungen des Leitbleches 18 durch durchgezogene bzw. gestrichelte Linien dargestellt.

Ferner ist an dem Saugrohr 12 im Bereich des Schwenkpunktes 19 ein Schieber 22 angeordnet, mit dem der Querschnitt des Luftnebenkanals 21 ausgangsseitig variierbar ist.

Das in Figur 1 dargestellte Kehrgerät 1 hat darüberhinaus in seinem Frontbereich als Tellerbürsten ausgebildete Seitenbesen 23, die, wie in Figur 2 erkennbar ist, seitlich vor der Kehrwalze 6 angeordnet sind und seitlich neben der Kehrwalze befindliches Kehrgut in den Bereich der Kehrwalze 6 fördern, von wo aus das Kehrgut über den Förderkanal 4 dem Sammelbehälter 5 zugeführt wird. Die Seitenbesen 23 sind über Lenker 24 verschwenkbar an einem Träger 25 angeordnet, der mit dem Kehrkopfrahmen 5 verbunden ist.

Zwischen dem Träger 25 und dem Saugrohr 12 sind Entlastungsfedern 26 vorgesehen, mit denen die Kehrkopfanlenkung 7 zusammen mit der Kehrwalze 6 und dem Tast- und Tragrad 10 relativ zum Kehrkopfrahmen 9 um das Gelenk 8 in Richtung auf die Aufstandsfläche 13 verschwenkt wird. Zum Ausgleich der Verschwenkbewegung, welche durch die Entlastungsfedern 26 hervorgerufen wird, weist der Kehrkopf 3 als Kufen 27 ausgebildete Führungselemente auf, die den Kehrkopf 3 bei Überfahren eines Hindernisses mit der Kraft der Entlastungsfedern 26 anheben und um das Gelenk 8 relativ zum Kehrkopfrahmen 9 verschwenken. Zu diesem Zweck ist der Schlauch 14 des Förderkanals 4 entsprechend in seiner Längsrichtung teleskopierbar ausgebildet, so daß beim Anheben des Kehrkopfes 3 eine Verkürzung des Förderkanals 4 vorgenommen werden kann.

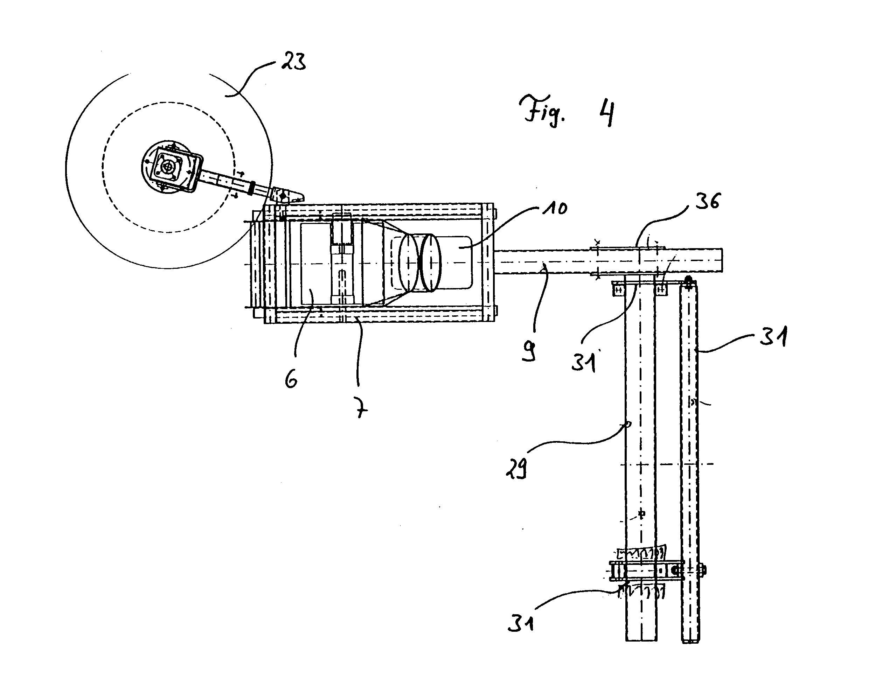

Der Kehrkopfrahmen 9 ist an einer Aufhängung 28, wie sie nachfolgend noch in bezug auf die Figuren 2 bis 4 beschrieben wird, angeordnet.

Diese Anlenkung 28 dient zur lösbaren Befestigung des Kehrgerätes 1 an dem Traktor 2 und weist ein Zentralrohr 29 auf, welches als Schwenkachse ausgebildet ist und in Schwenkhalterungen 30 gelagert ist. Die Schwenkhalterungen 30 sind verdrehfest mit einem Träger 31 verbunden, der Bestandteil des an dem Traktor 2 über Lenker 32 angelenkten Rahmens des Kehrgerätes 1 sind. Das Zentralrohr 29 ist demzufolge relativ zum Träger 31 verdrehbar angeordnet, wobei sowohl der Träger 31 als auch das Zentralrohr 29 im rechten Winkel zur Längsachse des Traktors 2 angeordnet sind.

Der Rahmen, welcher den Träger 31 aufweist, dient als Grundrahmen für den Sammelbehälter 5. An dem Träger 31 sind parallel zur Längsachse des Traktors 2 verlaufende Träger 33 angeschweißt, die an ihren freien Enden Aufnahmen 34 mit im wesentlichen U-förmiger Ausbildung aufweisen, in denen Stütz- oder Nachlaufräder 35 angeordnet sind.

Das Zentralrohr 39 ist drehbar in den Schwenkhalterungen 30 gelagert. Die Drehung erfolgt stufenlos mittels eines Hydraulikantriebs. Darüberhinaus ist das Zentralrohr 29 in seiner Achsrichtung verschiebbar in den Schwenkhalterungen 30 gelagert, so daß das Zentralrohr 29 parallel und relativ zum Träger 31 verschiebbar ist. An seinem dem Kehrkopfrahmen 9 zugewandten Ende trägt das Zentralrohr 29 eine Klemmhalterung 36, in welcher der Kehrkopfrahmen 9 stufenlos in Richtung seiner Längserstreckung verstellbar ist.

Durch diese Ausbildung kann das Kehrgerät 1 an verschiedene Spurweiten und Radstände verschiedener Traktoren 2 dadurch angepaßt werden, daß das Zentralrohr 29 in Abhängigkeit der Spurweite bspw. der Hinterräder 37 des Traktors und durch die Verschiebung des Kehrkopfrahmens 3 in der Klemmhalterung an den Radstand zwischen den Hinterrädern 37 und den Vorderrädern 38 des Traktors 2 angepaßt wird. Die Verstellung des Kehrkopfrahmens 9 in der Klemmhalterung 36 erfolgt hierbei mechanisch, wogegen die Verstellung des Zentralrohrs 29 in Richtung seiner Achse hydraulisch erfolgt. Der Grund hierfür liegt darin, daß die Verstellung des Zentralrohres 29 in Richtung seiner Längsachse auch dann notwendig sein kann, wenn das Kehrgerät 1 entsprechend bestimmter Parameter der zu kehrenden Fläche eingestellt werden soll. Beispielsweise erfolgt eine Einstellung des Kehrgerätes 1 hinsichtlich einer für den Traktor 2 nicht befahrbaren Fläche, die vollständig gekehrt werden soll. Demgegenüber ist die Anpassung des Kehrkopfrahmens 9 bezüglich der Klemmhalterung 36 nur bei der Montage des Kehrgerätes 1 an dem Traktor 2 in bezug auf den Radstand notwendig.

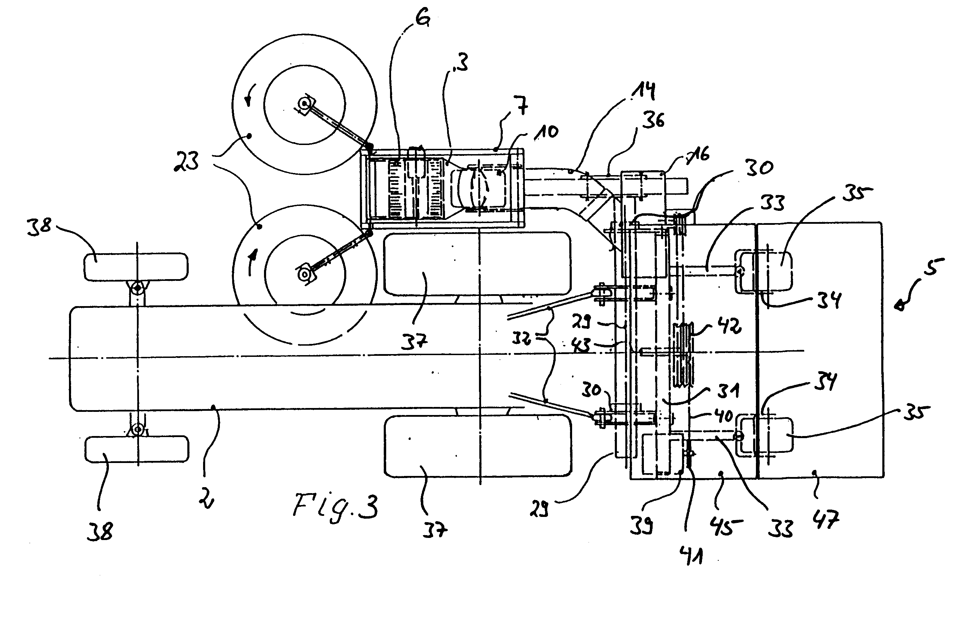

Wie insbesondere aus der Figur 3 zu erkennen ist, erfolgt der Antrieb des für die Verstellung des Zentralrohres 29 notwendigen Hydraulikaggregates 39 über einen Keilriemen 40, der über eine Keilriemenscheibe 41 des Hydraulikaggregats 39 und über eine Keilriemenscheibe 42 läuft, welche zusammen mit weiteren Keilriemenscheiben auf einer Welle 43 drehfest befestigt ist, die mit einer nicht dargestellten Zapfwelle des Traktors 2 verbindbar ist. Weitere Keilriemenscheiben, die auf dieser Welle 43 aufgesetzt sind, sind über Keilriemen 44 mit Keilriemenscheiben verbunden, die auf der Antriebsachse des Gebläses 17 angeordnet sind.

Der Antrieb des Motors der Kehrwalze 6 sowie der Motoren der Seitenbesen 23 erfolgt hydraulisch, wobei das Hydraulikaggregat 39 als Hydraulikpumpe ausgebildet ist, welche ein Fluidstrom über nicht dargestellte Leitungen zu den Motoren der Kehrwalze 6 und der Seitenbesen 23 fördert. Es sei an dieser Stelle erwähnt, daß die Seitenbesen 23 schwenkbar am Träger 25 befestigt sind, so daß die Breite der mit dem Kehrgerät 1 zu kehrenden Fläche in begrenztem Maße einstellbar ist.

Das Stütz- oder Nachlaufrad 35 kann gegenüber dem Rahmen nach unten auf Druck beaufschlagt werden. Dies erfolgt bspw. hydraulisch, so daß sich der Rahmen mit Kehrwalze 6 und den Seitenbesen 23 abhebt, um Unebenheiten, bspw. Bordsteine oder dgl. zu überfahren. In dieser Stellung wird aber auch eine Transportstellung eingenommen, wie sie auch durch Verdrehen des Zentralrohres 29 in den Schwenkhalterungen 30 ermöglicht wird. Eine weitere Anpassungsfähigkeit für die Kehrwalze 6 ist durch die schwimmende Aufhängung an dem Kehrkopfrahmen 9 gegeben, die aus entsprechenden Lenkern mit hinterem Drehpunkt, den Kufen 27 und den Entlastungsfedern 26 gebildet ist, die die Bürste nach oben anheben. Der Kehrkopfrahmen 9 sitzt zu diesem Zwecke selbst an dem Tast- und Tragrad 10, so daß er in einfacher Weise an Bodenverhältnisse anpassbar geführt ist und sich insoweit selbst trägt. Die Achse dieses Tast- und Tragrades 10 liegt etwa in derselben Vertikalebene, wie die Achse der Stütz- oder Nachlaufräder 35. Hierdurch ist die Verwendung eines nicht gelenkten Tast- oder Tragrades 10 möglich.

Nachfolgend wird der in Figur 1 dargestellte Sammelbehälter 5 detailliert beschrieben.

Der Sammelbehälter 5 besteht aus einem Behälterteil 45 und einem daran schwenkbeweglich über eine Schwenkachse 46 angelenkten, den Behälterteil 45 verschließenden Fallenteil 47, wobei Behälterteil 45 und Fallenteil 47 jeweils ein unter einem Winkel zur Aufstandsfläche 13 verlaufendes Bodenblech 48 bzw. 49 aufweisen, das bei geöffnetem Fallenteil 47 ein problemloses Herausrutschen des in den Sammelbehälter 5 angesammelten Kehrgutes ermöglicht.

Der Behälterteil 45 des Sammelbehälters 5 weist einen Eingangsstutzen 50 auf, der an dem Ausgangsstutzen des Gebläsegehäuses 16 angeschlossen ist. Oberhalb des Eingangsstutzens 50 ist ein erstes herausnehmbares Prallblech 51 angeordnet, daß das in Richtung des Pfeils 52 in den Sammelbehälter 5 einströmende Kehrgut in Richtung auf den Fallenteil 47 leitet.

Ferner weist der Behälterteil 45 in seinem oberen Abschlußblech ein Lochblech 53 auf, welches oberhalb des Prallblechs 51 angeordnet und von diesem fast vollständig abgedeckt ist, wobei zwischen dem Prallblech 51 und dem Lochblech 53 ein Abstand besteht. Das Lochblech 53 ist außenseitig des Sammelbehälters 5 mit einem verschwenkbar an der Außenseite des Sammelbehälters 5 befestigten Leitblech 54 verschließbar.

Der Fallenteil 47 weist in seinem oberen Teil eine Öffnung auf, in die eine Filtereinrichtung 55 einsetzbar ist. Diese Filtereinrichtung 55 besteht aus einem Filterplattenrahmen mit einer Vielzahl von sogenannten Filterplatten 56, die in Form einer Doppelplatte ausgebildet sind und die Öffnung im Fallenteil 47 derart abdecken, daß die in den Sammelbehälter 5 einströmende Luft nur über die Filtereinrichtung 55 aus dem Fallenteil 47 entweichen kann.

Im Bereich der Filtereinrichtung 55 ist innerhalb des Fallenteils 47 eine schwenkbare Lochwand 57 angeordnet. Diese Lochwand kann entweder parallel zu der Trennfuge zwischen Behälterteil 45 und Fallenteil 47, d.h. lotrecht angeordnet sein, oder bei herausgenommener Filtereinrichtung 55 die Öffnung für die Filtereinrichtung 55 verschließen.

Oberhalb der Öffnung für die Filtereinrichtung 55 weist der Fallenteil 47 eine als Regenabdeckung dienende Platte 58 auf, die ebenfalls schwenkbar befestigt sein kann. Schließlich ist in dem Fallenteil 47 ein zweites herausnehmbares Prallblech 59 derart angeordnet, daß es das in Richtung des Falz 52 einströmende und von dem ersten Prallblech 51 umgelenkte Kehrgut in Richtung auf eine Entleerungseinrichtung zwischen Behälterteil 45 und Fallenteil 47 leitet. Das Prallblech 59 ist unterhalb der Filtereinrichtung 55 angeordnet.

Die Filterplatten 56 können mit einer Rütteleinrichtung 60 versehen sein, die elektrisch oder hydraulisch betätigt werden kann, ggfs. ist auch eine Betätigung von Hand denkbar, bei deren Betätigung außerhalb der Betriebsphasen der Staub von den Außenflächen der Filterplatten 56 abgeschüttelt wird und in den unteren Teil des Sammelbehälters fällt.

Die verschiedenen Betriebsweisen des voranstehend beschriebenen Sammelbehälters 5 werden nachfolgend erläutert.

Bei Einsatz des Kehrgerätes 1, bei welchem trockene staubhaltige Luft über den Förderkanal 4 angesaugt wird, ist das schwenkbare Leitblech 54 über dem Lochblech 53 angeordnet, so daß das Lochblech 53 gegenüber der Umgebung des Sammelbehälters 5 abgedichtet ist. Das angesaugte staubförmige Kehrgut gelangt über den Förderkanal 4 und das Sauggebläse 17 in den Behälterteil 45 und anschließend in den Bereich des Fallenteils 47, in dem die Filtereinrichtung 55 angeordnet ist. Die in Lufteinströmrichtung vor der Filtereinrichtung 55 angeordnete Lochwand 57 dient bei dieser Betriebsweise dazu, gröbere Schmutzstücke, Gras usw. nicht in den Bereich der Filtereinrichtung 55 gelangen zu lassen. Für gröbere Steine usw. ist das im unteren Bereich des Fallenteils 47 angeordnete Prallblech 59 in den Sammelbehälter 5 eingesetzt.

Bei einer weiteren Betriebsweise, bei der feuchte staubhaltige Luft angesaugt wird, ist das schwenkbare Leitblech 54 aufgeklappt, so daß das darunter befindliche Lochblech 53 als Grobsieb dient. Steine und gröbere Partikel bleiben damit ohnehin im Sammelbehälter 5, ansonsten tritt die feuchte staubhaltige Luft praktisch vollständig durch das Lochblech 53 unterhalb des aufgeklappten Leitblechs 54 aus, so daß die Filterplatten 56 nicht mit feuchter Luft beaufschlagt werden. Um den Stauwiderstand vor den Filterplatten 56 zu erhöhen, kann man deren Ausgänge verschließen. Im übrigen sind diese Ausgänge von der regenabweisenden Platte 58 überdeckt, wie dies in Figur 1 dargestellt ist. Es ist vorgesehen, daß diese Platte 58 so ausgestaltet ist, daß sie zum Verschließen der Luftöffnungen im Bereich der Filtereinrichtung 55 dienen kann. Beispielsweise ist dies dadurch erreichbar, daß die Platte 58 in einfacher Weise zwischen einer geöffneten Stellung und einer geschlossenen Stellung verschwenkbar ist. Eine weitere Ausgestaltung ist darin zu sehen, daß das schwenkbare Leitblech 54 wahlweise über dem Lochblech 53 oder über der Öffnung für die Filtereinrichtung 55 angeordnet werden kann. Insoweit verschließt das Leitblech 54 entweder das Lochblech 53 des Behälterteils 45 oder aber die Ausgänge der Filtereinrichtung 55 im Fallenteil 47. Selbstverständlich ist es auch möglich, eine derartige Verschlußeinrichtung als Schieber auszubilden, der wahlweise über das Lochblech 53 oder die Ausgänge der Filtereinrichtung 55 verfahrbar ist.

Bei einer weiteren Betriebsweise, bei der trokkenes oder nasses Gras oder Laub angesaugt wird, sind die Filterplatten 56 der Filtereinrichtung 55 sämtlich aus dem Fallenteil 47 des Sammelbehälters 5 herausgenommen und die schwenkbare Lochwand 57 derart noch oben verschwenkt, daß die Öffnung für die Filtereinrichtung 55 durch die Lochwand 57 abgedeckt ist, so daß sie ähnlich wie das vordere Lochblech 53 als Grobfilter dient. Das vordere Leitblech 54 bleibt im Schließzustand, d.h. deckt das Lochblech 53 ab. Dieses vordere Leitblech 54 hat bei dieser Betriebsweise demzufolge die Aufgabe einer Füllstands- bzw. Verstopfungsanzeige, je nach dem, wie sich die Luftdruckverhältnisse in Abhängigkeit der Füllung des Behälters und/oder bei Verstopfungen einstellen. Damit kann dieser Sammelbehälter 5 aufgrund seiner Umrüstbarkeit nicht nur an einem Kehrgerät 1 sondern in anderer Anwendung auch an einem Zwischenachsmäher oder dgl. angeschlossen werden.

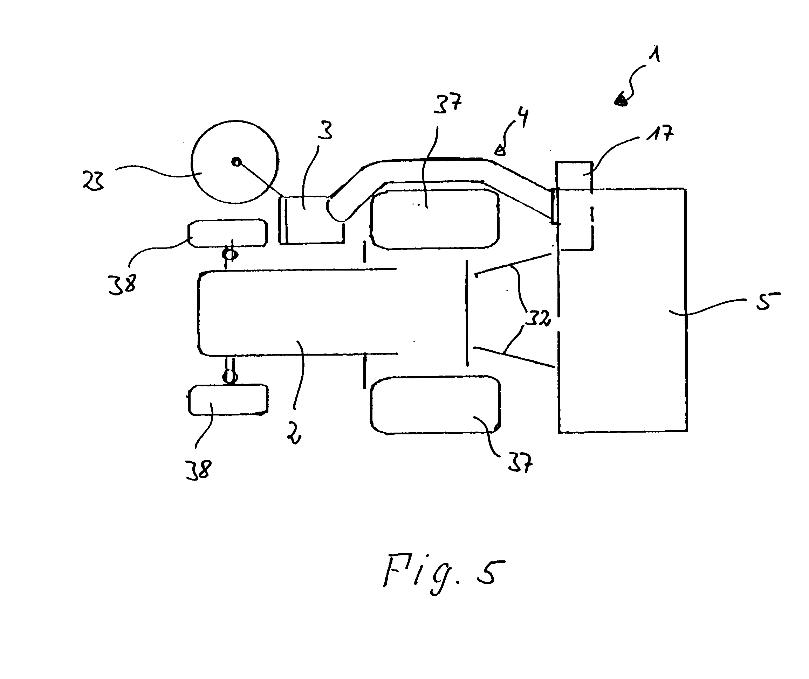

Bezugnehmend auf die Figuren 5 bis 8 zeigt die Figur 5 ein Kehrgerät 1 als Anbauaggregat eines Kleintraktors, mit einem Sammelbehälter 5, der als Huckepackgerät ausgebildet ist. Im Bereich des Sammelbehälters 5 ist das Saugebläse 17 angeordnet, welches über einen Förderkanal 4 mit einem Kehrkopf 3 verbunden ist, welcher seitlich am Traktor 2 zwischen einem Hinterrad 37 und einem Vorderrad 38 angeordnet ist. Der Kehrkopf 3 weist darüberhinaus einen Seitenbesen 23 auf, der um einen Drehpunkt relativ zum Kehrkopf 3 verschwenkbar angeordnet ist.

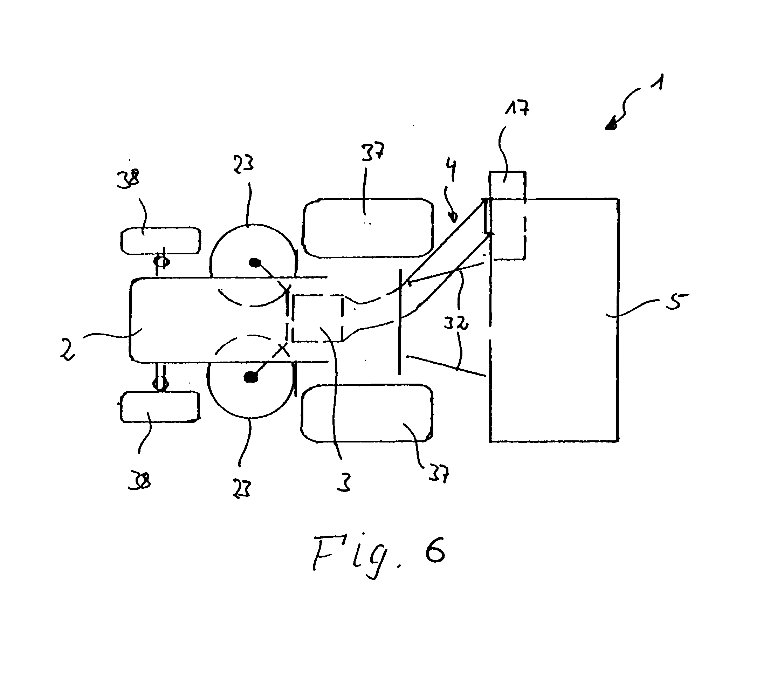

Eine weitere Ausführungsform des Kehrgeräts 1 ist in Figur 6 dargestellt. Wiederum ist an einem Traktor 2 im Heckbereich ein als Huckepackgerät ausgebildeter Sammelbehälter 5 angeordnet, der über ein Sauggebläse 17, einen Förderkanal 4 mit einem Kehrkopf 3 verbunden ist. Der Kehrkopf 3 weist zwei jeweils zwischen einem Hinterrad 37 und einem Vorderrad 38 angeordnete Seitenbesen auf, die wiederum relativ zum Kehrgerät 3 verschwenkbar angeordnet sind. Bei diesem Ausführungsbeispiel des Kehrgerätes 1 ist jedoch der Kehrkopf 3 unterhalb des Traktors 2, vorzugsweise im Bereich der Hinterachse angeordnet.

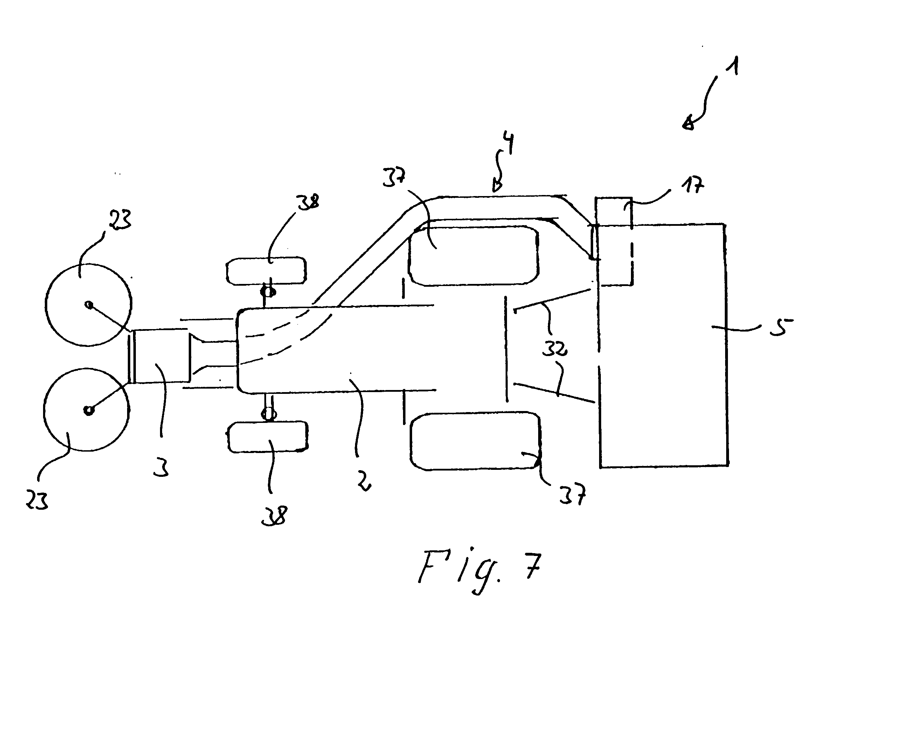

Ein weiteres Ausführungsbeispiel des Kehrgeräts 1 ist in Figur 7 dargestellt, wobei diesmal das Kehrgerät 3 im Frontbereich des Traktors 2 angeordnet und wiederum über einen Förderkanal 4 und Sauggebläse 17 mit einem als Huckepackgerät ausgebildeten Sammelbehälter 5 verbunden ist. Auch dieses Ausführungsbeispiel des Kehrgerätes 1 weist zwei relativ zum Kehrkopf 3 verschwenkbare Seitenbesen 23 auf.

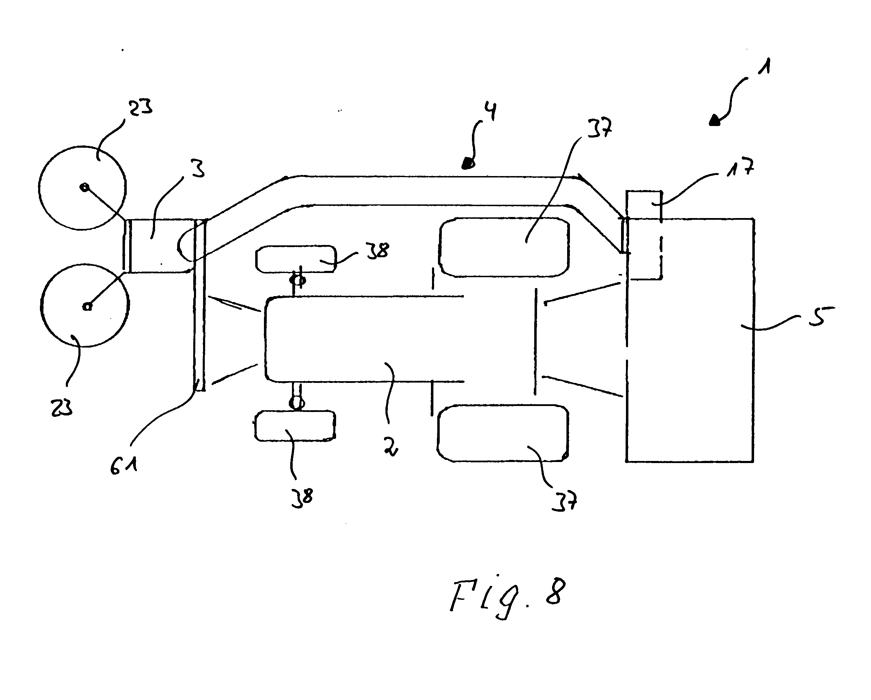

Schließlich ist in Figur 8 eine Weiterbildung des in Figur 7 dargestellten Kehrgerätes 1 gezeigt. Die vorteilhafte Weiterbildung des Kehrgerätes 1 besteht darin, daß der Kehrkopf 3 mit den Seitenbesen 23 entlang einer im Frontbereich des Traktors 2 über Lenker angeordnete Schiene 61 verschiebbar ist. Ansonsten stimmt dieses Ausführungsbeispiel des Kehrgerätes 1 mit dem Ausführungsbeispiel gemäß Figur 7 überein.

Die dargestellte Erfindung ist nicht auf die beschriebenen Ausführungsbeispiele beschränkt. Vielmehr sind Abwandlungen möglich, ohne den Schutzbereich der Erfindung zu verlassen. Beispielsweise kann der Sammelbehälter 5 als nachlaufender Anhänger, insbesondere mit Schwenkrädern ausgebildet sein, der demzufolge starr mit dem Traktor 2 verbunden ist. Der Sammelbehälter 5 kann darüberhinaus eine sogenannte Hochentleerung aufweisen. Schließlich sei an dieser Stelle darauf hingewiesen, daß die Anordnung des Kehrkopfes seitlich zwischen einem Hinter- und einem Vorderrad eines Traktors insbesondere den Vorteil hat, daß sie eine sehr kurze Schlauchführung im Bereich des Förderkanals 4 ermöglicht. Darüberhinaus ist es bei der seitlichen Anordnung des Kehrkopfes 3 von besonderem Vorteil, daß diese Anordnung in besonders einfacher Weise an einem Traktor 2 befestigbar ist und darüberhinaus eine vereinfachte Wartung zuläßt. Schließlich ist die seitlich versetzte Anordnung des Kehrkopfes 3 im Frontbereich des Traktors 2 möglich.

## Patentansprüche

1. Aufhängung zur Befestigung von Bodenbearbeitungsaggregaten an einem Zug- oder Trägerfahrzeug, insbesondere einem Kleintraktor oder dgl., mit einem vorzugsweise über Stütz-oder Nachlaufräder abgestützten Rahmen, der entweder starr oder über Lenker höhenverstellbar am Zug- oder Trägerfahrzeug befestigbar ist, wobei der Rahmen im wesentlichen im rechten Winkel zur Längsachse des Zug- oder Trägerfahrzeuges angeordnet und mit dem Bodenbearbeitungsaggregat verbunden ist,
dadurch gekennzeichnet,
daß der Rahmen zumindest eine im wesentlichen parallel verlaufende Schwenkachse (29) aufweist, an welcher zumindest ein Träger (9) als Teil des Bodenbearbeitungsaggregates drehfest befestigt ist, wobei die Schwenkachse (29) in ihrer Längsrichtung verschieblich gelagert ist.

2. Aufhängung nach Anspruch 1,
dadurch gekennzeichnet,
daß der Träger (9) in seiner Längsrichtung verschieblich an der Schwenkachse (29) gelagert ist.

3. Aufhängung nach Anspruch 1,
dadurch gekennzeichnet,
daß am freien Ende des Trägers (9) zumindest ein Tast- oder Tragrad (10) angeordnet ist.

4. Aufhängung nach Anspruch 1,
dadurch gekennzeichnet,
daß der Träger (9) als Kehrkopfrahmen ausgebildet ist.

5. Aufhängung nach Anspruch 4,
dadurch gekennzeichnet,
daß am Kehrkopfrahmen ein Kehrkopf (3) mit zumindest einer Bürstenwalzenaufnahme angeordnet ist, welche begrenzt tordierbar ist, und daß am Kehrkopf (3) Führungselemente (27) angeordnet sind, die in Arbeitsstellung auf dem zu bearbeitenden Untergrund aufliegen.

6. Aufhängung nach Anspruch 1,
dadurch gekennzeichnet,
daß die Schwenkachse (29) hydraulisch oder pneumatisch verstellbar, vorzugsweise drehbar und/oder verschiebbar ist.

7. Aufhängung nach Anspruch 5,
dadurch gekennzeichnet,
daß die Führungselemente (27) als Kufen ausgebildet sind, die vorzugsweise seitlich zur Kehrwalze (6) angeordnet sind und daß der Kehrkopf (3) Entlastungsfedern (26) hat, die mit den Kufen korrespondierend zusammenwirken und die Kehrwalze (6) anheben.

8. Aufhängung nach Anspruch 3,
dadurch gekennzeichnet,
daß die Achse des Tast- oder Tragrades (10) in der Vertikalebene der Stütz- oder Nachlaufräder (35) angeordnet ist.

9. Aufhängung nach Anspruch 1,
dadurch gekennzeichnet,
daß die Stütz- oder Nachlaufräder (35) hydraulisch oder pneumatisch absenkbar- und/oder anhebbar sind.
